# EUROPÄISCHE PATENTSCHRIFT

(11) **EP 1 144 105 B1**
(45) Veröffentlichungstag und Bekanntmachung des Hinweises auf die Patenterteilung: **25.09.2002**
(21) Anmeldenummer: 99963365.4
(22) Anmeldetag: 02.12.1999
(51) Int. Cl.: B01J 13/06

(54) **VERFAHREN ZUR HERSTELLUNG VON NANOPARTIKELDISPERSIONEN**
METHOD FOR PRODUCING NANOPARTICLE DISPERSIONS
PROCEDE DE PRODUCTION DE DISPERSIONS DE NANOPARTICULES

(30) Priorität: 11.12.1998 US 111859 P
(43) Veröffentlichungstag der Anmeldung: 17.10.2001
(73) Patentinhaber: Henkel Kommanditgesellschaft auf Aktien, 40589 Düsseldorf (DE)
(72) Erfinder: SCHRÖDER, Christine, D-40593 Düsseldorf (DE); DOLHAINE, Hans, D-41352 Glehn (DE); HEMPELMANN, Rolf, D-66386 St. Ingbert (DE); ROTH, Marcel, D-40597 Düsseldorf (DE)
(86) Internationale Anmeldenummer: EP9909406
(87) Internationale Veröffentlichungsnummer: WO00035577

(56) Entgegenhaltungen:
- EP-A- 0 174 270
- EP-A- 0 278 284
- EP-A- 0 422 978
- EP-A- 0 529 711
- GB-A- 483 221

## Beschreibung

### Gebiet der Erfindung

Die Erfindung befindet sich auf dem Gebiet der Nanopartikel und betrifft Dispersionen von Teilchen mit einem Durchmesser im Bereich von 10 bis 300 nm, die man durch Einbringen einer Makroemulsion in eine heiße flüssige Phase erhält.

### Stand der Technik

Die Herstellung von Nanoteilchen gehört derzeit zu einem der expandierensten Forschungsthemen im Bereich kosmetischer und pharmazeutischer Wirkstoffe. Stellvertretend für die Vielzahl an Veröffentlichungen zum Thema feinverteilter organischer Wirkstoffe, der sogenannten "Nanoorganics", sei auf die australische Patentschrift **AU 10708/88 B1** (BASF) verwiesen, aus der ein Verfahren zur Herstellung von Nanoteilchen bekannt ist, bei dem man organische Stoffe, in diesem Fall Carotinoide, zusammen mit geeigneten Emulgatoren in wassermischbaren Lösungsmitteln und Speiseölen löst und in eine wäßrige Schutzkolloidlösung einrührt. Die Isolierung der Nanoteilchen erfolgt anschließend durch Destillation und Sprühtrocknung. Dieses Verfahren ist jedoch technisch sehr aufwendig, zudem besteht die Gefahr, daß die Teilchen zusammenbacken.

Demzufolge hat die Aufgabe der Erfindung darin bestanden, ein verbessertes Verfahren zur Herstellung von organischen Nanoteilchen ("Nanoorganics") zur Verfügung zu stellen, welches die Nachteile des Stands der Technik vermeidet und dabei insbesondere mit möglichst geringem Aufwand Nanoteilchen des gewünschten Teilchengrößenbereiches beispielsweise in Form stabiler Dispersionen liefert.

### Beschreibung der Erfindung

Gegenstand der Erfindung ist ein Verfahren zur Herstellung von Nanopartikeldispersionen mit Teilchendurchmessem im Bereich von 10 bis 300, vorzugsweise 50 bis 150 nm, bei dem man
(a) organische Wirkstoffe zunächst in einem geeigneten Primärlösungsmittel löst,
(b) die Lösung anschließend unter Zugabe von Emulgatoren in einem Sekundärlösungsmittel einbringt, welches mit dem Primärlösungsmittel nicht mischbar ist,
(c) die resultierende Makroemulsion in ein auf 30 bis 120°C erhitztes Tertiärlösungsmittel einbringt, dabei gleichzeitig das Primärlösungsmittel verdampft und gegebenenfalls anschließend
(d) die flüssigen Bestandteile der resultierenden nanoskaligen Dispersion vollständig oder anteilig abdestilliert.

Überraschenderweise wurde gefunden, daß im Sinne des erfindungsgemäßen Verfahrens Dispersionen von Nanoteilchen der gewünschten Partikelgröße erhalten werden, die sich auch bei Temperaturlagerung als überaus stabil erweisen, d.h. weder sedimentieren noch agglomerieren.

### Organische Wirkstoffe

Als organische Wirkstoffe, die im Sinne des erfindungsgemäßen Verfahrens in Nanopartikel überführt werden können, kommen folgende Verbindungen in Betracht:

**Chitosane** stellen Biopolymere dar und werden zur Gruppe der Hydrokolloide gezählt. Chemisch betrachtet handelt es sich um partiell deacetylierte Chitine unterschiedlichen Molekulargewichtes, die den folgenden - idealisierten - Monomerbaustein enthalten:

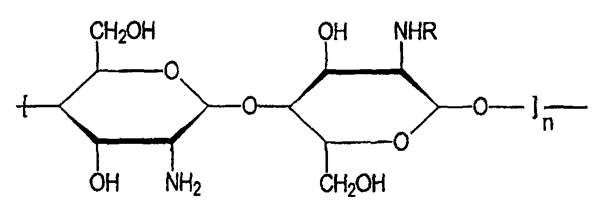

Im Gegensatz zu den meisten Hydrokolloiden, die im Bereich biologischer pH-Werte negativ geladen sind, stellen Chitosane unter diesen Bedingungen kationische Biopolymere dar. Die positiv geladenen Chitosane können mit entgegengesetzt geladenen Oberflächen in Wechselwirkung treten und werden daher in kosmetischen Haar- und Körperpflegemitteln sowie pharmazeutischen Zubereitungen eingesetzt (vgl. **Ullmann's Encyclopedia of Industrial Chemistry, 5th Ed., Vol. A6, Weinheim, Verlag Chemie, 1986, S. 231-332).** Übersichten zu diesem Thema sind auch beispielsweise von B.Gesslein et al. in **HAPPI 27, 57 (1990),** O.Skaugrud in **Drug Cosm.lnd. 148, 24 (1991)** und E.Onsoyen et al. in **Seifen-Öle-Fette-Wachse 117, 633 (1991)** erschienen. Zur Herstellung der Chitosane geht man von Chitin, vorzugsweise den Schalenresten von Krustentieren aus, die als billige Rohstoffe in großen Mengen zur Verfügung stehen. Das Chitin wird dabei in einem Verfahren das erstmals von Hackmann et al. beschrieben worden ist, üblicherweise zunächst durch Zusatz von Basen deproteiniert, durch Zugabe von Mineralsäuren demineralisiert und schließlich durch Zugabe von starken Basen deacetyliert, wobei die Molekulargewichte über ein breites Spektrum verteilt sein können. Entsprechende Verfahren sind beispielsweise aus **Makromol. Chem. 177, 3589 (1976)** oder der französischen Patentanmeldung **FR 2701266 A1** bekannt. Vorzugsweise werden solche Typen eingesetzt, wie sie in den deutschen Patentanmeldungen **DE 4442987 A1** und **DE 19537001 A1** (Henkel) offenbart werden, und die ein durchschnittliches Molekulargewicht von 800.000 bis 1.200.000 Dalton, eine Viskosität nach Brookfield (1 Gew.-%ig in Glycolsäure) unterhalb von 5000 mPas, einen Deacetylierungsgrad im Bereich von 80 bis 88 % und einem Aschegehalt von weniger als 0,3 Gew.-% aufweisen. Neben den Chitosanen als typischen kationischen Biopolymeren kommen im Sinne der Erfindung auch anionisch bzw. nichtionisch derivatisierte Chitosane, wie z.B. Carboxylierungs-, Succinylierungs- oder Alkoxylierungsprodukte in Frage, wie sie beispielsweise in der deutschen Patentschrift **DE 3713099 C2** (L'Oreal) sowie der deutschen Patentanmeldung **DE 19604180 A1** (Henkel) beschrieben werden.

**Sterole** (oder synonym Stenole) sind tierische bzw. pflanzliche Steroide zu verstehen, die nur am C-3 eine Hydroxylgruppe, sonst aber keine funktionellen Gruppen tragen. In der Regel besitzen die Sterole 27 bis 30 Kohlenstoffatome und eine Doppelbindung in 5/6, gegebenenfalls 7/8, 8/9 oder anderen Positionen. Neben diesen ungesättigten Spezies kommen als Sterole auch die durch Härtung erhältlichen gesättigten Verbindungen in Frage, die als Stanole bezeichnet werden und von der vorliegenden Erfindung mitumschlossen werden. Ein Beispiel für ein geeignetes tierisches Sterol ist Cholesterol. Typische Beispiele für geeignete Phytosterole, welche aus anwendungstechnischen Gründen bevorzugt werden, sind beispielsweise Ergosterole, Campesterole, Stigmasterole, Brassicasterole sowie vorzugsweise Sitosterole bzw. Sitostanole und insbesondere β-Sitosterole bzw. β-Sitostanole. Neben den genannten Phytosterolen werden vorzugsweise deren Ester eingesetzt. Die Säurekomponente der Esters kann auf Carbonsäuren der Formel (**I**) zurückgehen,

**R**^{**1**}**CO-OH (I)**

in der R¹CO für einen aliphatischen, linearen oder verzweigten Acylrest mit 2 bis 22 Kohlenstoffatomen und 0 und/oder 1, 2 oder 3 Doppelbindungen steht. Typische Beispiele sind Essigsäure, Propionsäure, Buttersäure, Valeriansäure, Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, konjugierte Linolsäure (CLA), Linolensäure, Elaeostearinsäure, Arachinsäure, Gadoleinsäure, Behensäure und Erucasäure sowie deren technische Mischungen, die z.B. bei der Druckspaltung von natürlichen Fetten und Ölen, bei der Reduktion von Aldehyden aus der Roelen'schen Oxosynthese oder als Monomerfraktion bei der Dimerisierung von ungesättigten Fettsäuren anfallen. Bevorzugt sind technische Fettsäuren mit 12 bis 18 Kohlenstoffatomen wie beispielsweise Kokos-, Palm-, Palmkern- oder Talgfettsäure. Besonders bevorzugt ist der Einsatz von Estern des β-Sitosterols bzw. β-Sitostanols mit Fettsäuren mit 12 bis 18 Kohlenstoffatomen. Diese Ester können sowohl durch direkte Veresterung der Phytostenole mit den Fettsäuren oder aber durch Umesterung mit Fettsäureniedrigalkylestem oder Triglyceriden in Gegenwart geeigneter Katalysatoren, wie z.B. Natriumethylat oder speziell auch Enzymen hergestellt werden [vgl. **EP 0195311 A2** (Yoshikawa)].

Typische Beispiele für Antioxidantien sind Aminosäuren (z.B. Glycin, Histidin, Tyrosin, Tryptophan) und deren Derivate, Imidazole (z.B. Urocaninsäure) und deren Derivate, Peptide wie D,L-Carnosin, D-Camosin, L-Carnosin und deren Derivate (z.B. Anserin), Carotinoide, Carotine (z.B. α-Carotin, β-Carotin, Lycopin) und deren Derivate, Chlorogensäure und deren Derivate, Liponsäure und deren Derivate (z.B. Dihydroliponsäure), Aurothioglucose, Propylthiouracil und andere Thiole (z.B. Thioredoxin, Glutathion, Cystein, Cystin, Cystamin und deren Glycosyl-, N-Acetyl-, Methyl-, Ethyl-, Propyl-, Amyl-, Butyl- und Lauryl-, Palmitoyl-, Oleyl-, γ-Linoleyl-, Cholesteryl- und Glycerylester) sowie deren Salze, Dilaurylthiodipropionat, Distearylthiodipropionat, Thiodipropionsäure und deren Derivate (Ester, Ether, Peptide, Lipide, Nukleotide, Nukleoside und Salze) sowie Sulfoximinverbindungen (z.B. Buthioninsulfoximine, Homocysteinsulfoximin, Butioninsulfone, Penta-, Hexa-, Heptathioninsulfoximin) in sehr geringen verträglichen Dosierungen (z.B. µmol bis µmol/kg), femer (Metall)-Chelatoren (z.B. α-Hydroxyfett-säuren, Palmitinsäure, Phytinsäure, Lactoferrin), α-Hydroxysäuren (z.B. Citronensäure, Milchsäure, Apfelsäure), Huminsäure, Gallensäure, Gallenextrakte, Bilirubin, Biliverdin, EDTA, EGTA und deren Derivate, ungesättigte Fettsäuren und deren Derivate (z.B. γ-Linolensäure, Linolsäure, Ölsäure), Folsäure und deren Derivate, Ubichinon und Ubichinol und deren Derivate, Vitamin C und Derivate (z.B. Ascorbylpalmitat, Mg-Ascorbylphosphat, Ascorbylacetat), Tocopherole und Derivate (z.B. Vitamin-E-acetat), Vitamin A und Derivate (Vitamin-A-palmitat) sowie Koniferylbenzoat des Benzoeharzes, Rutinsäure und deren Derivate, α-Glycosylrutin, Ferulasäure, Furfurylidenglucitol, Camosin, Butylhydroxytoluol, Butylhydroxyanisol, Nordihydroguajakharzsäure, Nordihydroguajaretsäure, Rosmarinsäure, Trihydroxybutyrophenon, Harnsäure und deren Derivate, Mannose und deren Derivate, Superoxid-Dismutase, Zink und dessen Derivate (z.B. ZnO, ZnSO₄) Selen und dessen Derivate (z.B. Selen-Methionin), Stilbene und deren Derivate (z.B. Stilbenoxid, trans-Stilbenoxid) und die erfindungsgemäß geeigneten Derivate (Salze, Ester, Ether, Zucker, Nukleotide, Nukleoside, Peptide und Lipide) dieser genannten Wirkstoffe.

**Flavone**, wie z.B. Flavon (Primel), Chrysin (Pappel), Galangin (Glagantwurzel), Apigenin (Löwenmaul, Kamille, Dahlie), Luteolin (Fingerhut, Dahlie), Kämpferol (Faulbaum, Rittersporn, Schlehen), Querutin (Eiche, Goldlack, Stiefmütterchen), Quercetin (Eiche, Goldlack, Stiefmütterchen), Morin (Maulbeerbaum), Robinetin (Akazien), Gossynetin (Baumwolle, Hibiscus), Myricetin (Johannisbeere, Hama-melis), Fisetin (Fisetholz), Rutin (Citrusfrüchte, Stiefmütterchen, Lindenblüten, Tee, Johanniskraut, Aka-zien), Hesperidin (Orangenschalen), Naringin (Pampelmusen), Daidzein (Soja), Genistein (Soja, Rot-klee), Prumetin (Pflaumenbaum), Biochanin (Kichererbse, Klee), Santal (Sandelholz, Rotholz), Praten-sein (Klee), Bioflavonoide aus Gingko, Eibe und Zypresse.

Weiterhin können synthetische oder natürliche **Wachse** eingesetzt werden, wie z.B. Paraffinwachse, hydriertes Ricinusöl, Cetylplamitat, Ethylenoxid-Wachse, Perlglanzwachse, Camaubawachs, Bienenwachs, Sonnenblumenwachs und Apfelwachs.

Ebenfalls als Ausgangsstoffe geeignet sind bei Raumtemperatur feste **Fettsäuren** und **Fettalkohole** mit 12 bis 22 Kohlenstoffatomen, wie z.B. Laurinsäure, Isotridecansäure, Myristinsäure, Palmitinsäure, Stearinsäure und Behensäure sowie deren technische Mischungen, bzw. Cetylalkohol, Palmoleylalkohol, Stearylalkohol und Behenylalkohol sowie deren technische Mischungen. Ebenfalls geeignet sind Mischungen der genannten Fettalkoholen mit Alkylpolyglucosiden, wobei Mischungen von Cetearylalkohol mit Cetearylglucosiden im Mischungsverhältnis 10 : 90 bis 90 : 10 besonders bevorzugt sind.

Als Ausgangsstoffe für das erfindungsgemäße Verfahren kommen auch **Metallseifen** in Frage, wie z.B. die Calcium-, Magnesium-, Aluminium- und/oder Zinksalze von Carbonsäuren mit 10 bis 18 Kohlenstoffatomen, insbesondere der Undecylensäure, Stearinsäure, Hydroxystearinsäure oder Ricinolsäure.

Als **Farbstoffe** kommen dabei beispielsweise **direktziehende Farbstoffe** aus der Gruppe der Nitrophenylendiamine, Nitroaminophenole, Anthrachinone oder Indophenole in Betracht, wie z.B. die unter den internationalen Bezeichnungen bzw. Handelsnamen HC Yellow 2, HC Yellow 4, Basic Yellow 57, Disperse Orange 3, HC Red 3, HC Red BN, Basic Red 76, HC Blue 2, Disperse Blue 3, Basic Blue 99, HC Violet 1, Disperse Violet 1, Disperse Violet 4, Disperse Black 9, Basic Brown 16, Basic Brown 17, Pikraminsäure und Rodol 9 R bekannten Verbindungen sowie 4-Amino-2-nitrodiphenylamin-2'carbonsäure, 6-Nitro-1,2,3,4-tetrahydrochinoxalin, (N-2,3-Dihydroxypropyl-2-nitro4-trifluormethyl)-aminobenzol und 4-N-Ethyl-1,4-bis(2'-hydroxyethylamino)-2-nitrobenzol-hydrochlorid. Weiterhin können auch in der Natur vorkommende Farbstoffe wie beispielsweise Henna rot, Henna neutral, Henna schwarz, Kamillenblüte, Sandelholz, schwarzer Tee, Faulbaumrinde, Salbei, Blauholz, Krappwurzel, Catechu, Sedre und Alkannawurzel sowie Indigo, Cochenille, Shikonin, Alizarin, Juglon und Hematoxilin verwendet werden. Alternativ lassen sich **Oxidationsfarbstoffe** einsetzen, die aus Entwicklerund Kupplerkomponente bestehen. Als Entwicklerkomponenten werden beispielsweise primäre aromatische Amine mit einer weiteren, in para- oder ortho-Position befindlichen freien oder substituierten Hydroxy- oder Aminogruppe, Diaminopyridinderivate, heterocyclische Hydrazone, 4-Aminopyrazolonderivate sowie 2,4,5,6-Tetraaminopyrimidin und dessen Derivate eingesetzt. Spezielle Vertreter sind u.a. p-Toluylendiamin, p-Aminophenol, N,N-Bis-(2-hydroxy-ethyl)-p-phenylendiamin, 2-(2,5-Diaminophenoxy)ethanol, 1-Phenyl-3-carboxyamido-4-amino-pyrazolon-5 und 4-Amino-3-methyl-phenol, 2-(2-Hydroxyethyl)-1,4-aminobenzol und 2,4,5,6-Tetraaminopyrimidin. Als Kupplerkomponenten werden in der Regel m-Phenylendiaminderivate, Naphthole, Resorcin und Resorcinderivate, Pyrazolone, m-Aminophenole sowie Pyridin-Derivate verwendet. Als Kupplersubstanzen eignen sich insbesondere 1-Naphthol, Pyrogallol, 1,5-, 2,7- und 1,7-Dihydroxynaphthalin, 5-Amino-2-methylphenol, m-Aminophenol, Resorcin, Resorcinmonomethylether, m-Phenylendiamin, 1-Phenyl-3-methyl-pyrazolon-5,2,4-Dichlor-3-aminophenol, 1,3-Bis-(2,4-diaminophenoxy)-propan, 2-Chlorresorcin, 2-Chlor-6-methyl-3-aminophe-nol, 2-Methylresorcin, 2,5-Dimethylresorcin, 2,6-Dihydroxypyridin und 2,6-Diaminopyridin. Des weiteren können auch natürliche Farbpigmente aus Pflanzen, wie z.B. Chlorophylle, Carotine und Anthocyane eingesetzt werden.

Für die Herstellung von Nanopigmenten geeignete **UV-Lichtschutzfaktoren** sind z.B:
- 3-Benzylidencampher bzw. 3-Benzylidennorcampher und dessen Derivate, z.B. 3-(4-Methylbenzyliden)campher wie in der **EP 0693471 B1** beschrieben;
- 4-Aminobenzoesäurederivate, vorzugsweise 4-(Dimethylamino)benzoesäure-2-ethylhexylester, 4-(Dimethylamino)benzoesäure-2-octylester und 4-(Dimethylamino)benzoesäureamylester;
- Ester der Zimtsäure, vorzugsweise 4-Methoxyzimtsäure-2-ethylhexylester, 4-Methoxyzimtsäurepropylester, 4-Methoxyzimtsäureisoamylester 2-Cyano-3,3-phenylzimtsäure-2-ethylhexylester (Octocrylene);
- Ester der Salicylsäure, vorzugsweise Salicylsäure-2-ethylhexylester, Salicylsäure-4-isopropylbenzylester, Salicylsäurehomomenthylester;
- Derivate des Benzophenons, vorzugsweise 2-Hydroxy-4-methoxybenzophenon, 2-Hydroxy-4-methoxy-4'-methylbenzophenon, 2,2'-Dihydroxy-4-methoxybenzophenon;
- Ester der Benzalmalonsäure, vorzugsweise 4-Methoxybenzmalonsäuredi-2-ethylhexylester;
- Triazinderivate, wie z.B. 2,4,6-Trianilino-(p-carbo-2'-ethyl-1'-hexyloxy)-1,3,5-triazin und Octyl Triazon, wie in der **EP 0818450 A1** beschrieben;
- Propan-1,3-dione, wie z.B. 1-(4-tert.Butylphenyl)-3-(4'methoxyphenyl)propan-1,3-dion;
- Ketotricyclo(5.2.1.0)decan-Derivate, wie in der **EP 0694521 B1** beschrieben.
- 2-Phenylbenzimidazol-5-sulfonsäure und deren Alkali-, Erdalkali-, Ammonium-, Alkylammonium-, Alkanolammonium- und Glucammoniumsalze;
- Sulfonsäurederivate von Benzophenonen, vorzugsweise 2-Hydroxy-4-methoxybenzophenon-5-sulfonsäure und ihre Salze;
- Sulfonsäurederivate des 3-Benzylidencamphers, wie z.B. 4-(2-Oxo-3-bornylidenmethyl)benzolsulfonsäure und 2-Methyl-5-(2-oxo-3-bornyliden)sulfonsäure und deren Salze.
- Benzoylmethanderivate, wie beispielsweise 1-(4'-tert.Butylphenyl)-3-(4'-methoxyphenyl)propan-1,3-dion, 4-tert.-Butyl-4'-methoxydibenzoyl-methan (Parsol 1789), oder 1-Phenyl-3-(4'-isopropylphenyl)-propan-1,3-dion.

Weitere geeignete UV-Lichtschutzfilter sind der Übersicht von P.Finkel in **SÖFW-Journal 122, 543 (1996)** zu entnehmen.
Des weiteren geeignete Einsatzstoffe sind **Riechstoffe.** Natürliche Riechstoffe sind Extrakte von Blüten (Lilie, Lavendel, Rosen, Jasmin, Neroli, Ylang-Ylang), Stengeln und Blättern (Geranium, Patchouli, Petitgrain), Früchten (Anis, Koriander, Kümmel, Wacholder), Fruchtschalen (Bergamotte, Zitrone, Orangen), Wurzeln (Macis, Angelica, Sellerie, Kardamon, Costus, Iris, Calmus), Hölzern (Pinien-, Sandel-, Guajak-, Zedern-, Rosenholz), Kräutern und Gräsern (Estragon, Lemongras, Salbei, Thymian), Nadeln und Zweigen (Fichte, Tanne, Kiefer, Latschen), Harzen und Balsamen (Galbanum, Elemi, Benzoe, Myrrhe, Olibanum, Opoponax). Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethem zählen beispielsweise Benzylethylether, zu den Aldehyden z.B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z.B. die Jonone, α-iso-methylionon und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Weiterhin geeignet sind Ambroxan, Heliotropin, Vanillin, Ethylvanillin, Cumarin, Campher, Menthol, Indol und Maltol sowie die Extrakte von Reis, Reisschalen, Myrrhe, Olibanum, Mistel und Salvia Sclarea.

In das Verfahren können auch **Enzyme** eingesetzt werden, wie z.B. Cholin-Oxidase (aus Bakterien), Peroxidase (aus Sojabohnen), Laccasen und Tyrosinasen (aus Pilzen); Geeignete **Enzyminhibitoren** sind z.B. Phenylboronsäure und deren Derivate, Pentapeptide vom Typ Gly-Pro-Phe-Pro-Leu und Peptide, die diese Sequenz enthalten, Bacitracin, Aminoethylbenzolsulfonylfluorid, die alle als Serin-Protease-Inhibitoren zur Regelung der Hautschuppung wirksam sind. Als Tyrosinase-Inhibitoren (Skin-Whitener) können Koji-Säure, Arbutin, Epicatechingallat, Bacelain, Dihydromyrecitin, Ascorbinsäure sowie 1000-1500 D-Proteine aus Seidenproteinhydroylsaten eingesetzt werden. Als Elastase-Inhibitoren zur Hautverjüngung können beispielsweise Cholesterol- und Phytosterolsulfat eingesetzt werden

Des weiteren können alle weiteren bei Raumtemperatur festen **kosmetischen Inhaltsstoffe**, wie z.B.
- Chitine,
- Phospholipide (Lecithine),
- Salicylsäureamid
- Coffein
- Allantoin
- Boswelliasäure,
- Ferulasäure,
- Glycyrrhizin,
- Oryzanol
- Inulin
nach dem erfindungsgemäßen Verfahren in Nanopartikel überführt werden.

### Herstellung der Makroemulsion

Zur Herstellung der Makroemulsion (Schritt a) werden die organischen Wirkstoffe in Primärlösungsmitteln möglichst bis zur Sättigung gelöst, welche vorzugsweise einen Siedepunkt unterhalb von 110, insbesondere unterhalb von 80°C aufweisen und sich daher im Laufe des Verfahrens mühelos wieder entfemen lassen. Vorzugsweise handelt es sich dabei um Aceton oder Methanol und insbesondere um Wasser, Ethanol, Diethylether, Hexan oder Heptan. Die Lösung der Wirkstoffe wird anschließend mit einem Sekundärlösungsmittel versetzt, wobei sich die Auswahl des Sekundärlösungsmittels vor allem danach richtet, daß es mit dem Primärlösungsmittel nicht mischbar ist. Das Gewichtsverhältnis zwischen Primär- und Sekundärlösungsmittel ist wenig kritisch, liegt jedoch typischerweise im Bereich von 10 : 90 bis 90 : 10 und in der Regel bei etwa 30 : 70 bis 20 : 80. Zur Bildung der Makroemulsion werden Emulgatoren in Mengen von vorzugsweise 0,5 bis 25 und insbesondere 1 bis 10 Gew.-% - bezogen auf die Makroemulsion - zugegeben.

Als **Emulgatoren** kommen beispielsweise nichtionogene Tenside aus mindestens einer der folgenden Gruppen in Frage:
(1) Anlagerungsprodukte von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe;
(2) C_{12/18}-Fettsäuremono- und -diester von Anlagerungsprodukten von 1 bis 30 Mol Ethylenoxid an Glycerin;
(3) Glycerinmono- und -diester und Sorbitanmono- und -diester von gesättigten und ungesättigten Fettsäuren mit 6 bis 22 Kohlenstoffatomen und deren Ethylenoxidanlagerungsprodukte ;
(4) Alkylmono- und -oligoglycoside mit 8 bis 22 Kohlenstoffatomen im Alkylrest und deren ethoxylierte Analoga;
(5) Anlagerungsprodukte von 15 bis 60 Mol Ethylenoxid an Ricinusöl und/oder gehärtetes Ricinusöl;
(6) Polyol- und insbesondere Polyglycerinester, wie z.B. Polyglycerinpolyricinoleat, Polyglycerinpoly-12-hydroxystearat oder Polyglycerindimerat. Ebenfalls geeignet sind Gemische von Verbindungen aus mehreren dieser Substanzklassen;
(7) Anlagerungsprodukte von 2 bis 15 Mol Ethylenoxid an Ricinusöl und/oder gehärtetes Ricinusöl;
(8) Partialester auf Basis linearer, verzweigter, ungesättigter bzw. gesättigter C_{6/22}-Fettsäuren, Ricinolsäure sowie 12-Hydroxystearinsäure und Glycerin, Polyglycerin, Pentaerythrit, Dipentaerythrit, Zuckeralkohole (z.B. Sorbit), Alkylglucoside (z.B. Methylglucosid, Butylglucosid, Laurylglucosid) sowie Polyglucoside (z.B. Cellulose);
(9) Mono-, Di- und Trialkylphosphate sowie Mono-, Di- und/oder Tri-PEG-alkylphosphate und deren Salze;
(10) Wollwachsalkohole;
(11) Polysiloxan-Polyalkyl-Polyether-Copolymere bzw. entsprechende Derivate;
(12) Mischester aus Pentaerythrit, Fettsäuren, Citronensäure und Fettalkohol gemäß **DE-PS 1165574** und/oder Mischester von Fettsäuren mit 6 bis 22 Kohlenstoffatomen, Methylglucose und Polyolen, vorzugsweise Glycerin oder Polyglycerin sowie
(13) Polyalkylenglycole.

Die Anlagerungsprodukte von Ethylenoxid und/oder von Propylenoxid an Fettalkohole, Fettsäuren, Alkylphenole, Glycerinmono- und -diester sowie Sorbitanmono- und -diester von Fettsäuren oder an Ricinusöl stellen bekannte, im Handel erhältliche Produkte dar. Es handelt sich dabei um Homologengemische, deren mittlerer Alkoxylierungsgrad dem Verhältnis der Stoffmengen von Ethylenoxid und/oder Propylenoxid und Substrat, mit denen die Anlagerungsreaktion durchgeführt wird, entspricht. C_{12/18}-Fettsäuremono- und -diester von Anlagerungsprodukten von Ethylenoxid an Glycerin sind aus **DE-PS 2024051** als Rückfettungsmittel für kosmetische Zubereitungen bekannt.

C_{8/18}-Alkylmono- und -oligoglycoside, ihre Herstellung und ihre Verwendung sind aus dem Stand der Technik bekannt. Ihre Herstellung erfolgt insbesondere durch Umsetzung von Glucose oder Oligosacchariden mit primären Alkoholen mit 8 bis 18 C-Atomen. Bezüglich des Glycosidrestes gilt, daß sowohl Monoglycoside, bei denen ein cyclischer Zuckerrest glycosidisch an den Fettalkohol gebunden ist, als auch oligomere Glycoside mit einem Oligomerisationsgrad bis vorzugsweise etwa 8 geeignet sind. Der Oligomerisierungsgrad ist dabei ein statistischer Mittelwert, dem eine für solche technischen Produkte übliche Homologenverteilung zugrunde liegt.

Weiterhin können als Emulgatoren zwitterionische Tenside verwendet werden. Als zwitterionische Tenside werden solche oberflächenaktiven Verbindungen bezeichnet, die im Molekül mindestens eine quartäre Ammoniumgruppe und mindestens eine Carboxylat- und eine Sulfonatgruppe tragen. Besonders geeignete zwitterionische Tenside sind die sogenannten Betaine wie die N-Alkyl-N,N-dimethylammoniumglycinate, beispielsweise das Kokosalkyldimethylammoniumglycinat, N-Acylaminopropyl-N,N-dimethylammoniumglycinate, beispielsweise das Kokosacylaminopropyldimethylammoniumglycinat, und 2-Alkyl-3-carboxylmethyl-3-hydroxyethylimidazoline mit jeweils 8 bis 18 C-Atomen in der Alkyloder Acylgruppe sowie das Kokosacylaminoethylhydroxyethylcarboxymethylglycinat. Besonders bevorzugt ist das unter der CTFA-Bezeichnung *Cocamidopropyl Betaine* bekannte Fettsäureamid-Derivat. Ebenfalls geeignete Emulgatoren sind ampholytische Tenside. Unter ampholytischen Tensiden werden solche oberflächenaktiven Verbindungen verstanden, die außer einer C_{8/18}-Alkyl- oder -Acylgruppe im Molekül mindestens eine freie Aminogruppe und mindestens eine -COOH- oder -SO₃H-Gruppe enthalten und zur Ausbildung innerer Salze befähigt sind. Beispiele für geeignete ampholytische Tenside sind N-Alkylglycine, N-Alkylpropionsäuren, N-Alkylaminobuttersäuren, N-Alkyliminodipropionsäuren, N-Hydroxyethyl-N-alkylamidopropylglycine, N-Alkyltaurine, N-Alkylsarcosine, 2-Alkylaminopropionsäuren und Alkylaminoessigsäuren mit jeweils etwa 8 bis 18 C-Atomen in der Alkylgruppe. Besonders bevorzugte ampholytische Tenside sind das N-Kokosalkylaminopropionat, das Kokosacylaminoethylaminopropionat und das C_{12/18}-Acylsarcosin. Neben den ampholytischen kommen auch quartäre Emulgatoren in Betracht, wobei solche vom Typ der Esterquats, vorzugsweise methylquatemierte Difettsäuretriethanolaminester-Salze, besonders bevorzugt sind.

Bei dem Sekundärlösungsmittel handelt es sich vorzugsweise um Wasser; bevorzugt ist die Kombination Primärlösungsmittel/Sekundärlösungsmittel = Diethylether/Wasser. Als Sekundärlösungsmittel eignen sich jedoch auch **kosmetische Öle.** Typische Beispiele sind Guerbetalkohole auf Basis von Fettalkoholen mit 6 bis 18, vorzugsweise 8 bis 10 Kohlenstoffatomen, Ester von linearen C₆-C₂₂-Fettsäuren mit linearen C₆-C₂₂-Fettalkoholen, Ester von verzweigten C₆-C₁₃-Carbonsäuren mit linearen C₆-C₂₂-Fettalkoholen, Ester von linearen C₆-C₂₂-Fettsäuren mit verzweigten Alkoholen, insbesondere 2-Ethylhexanol, Ester von Hydroxycarbonsäuren mit linearen oder verzweigten C₆-C₂₂-Fettalkoholen, insbesondere Dioctyl Malate, Ester von linearen undloder verzweigten Fettsäuren mit mehrwertigen Alkoholen (wie z.B. Propylenglycol, Dimerdiol oder Trimertriol) und/oder Guerbetalkoholen, Triglyceride auf Basis C₆-C₁₀-Fettsäuren, flüssige Mono-/Di-/Triglyceridmischungen auf Basis von C₆-C₁₈-Fettsäuren, Ester von C₆-C₂₂-Fettalkoholen und/oder Guerbetalkoholen mit aromatischen Carbonsäuren, insbesondere Benzoesäure, Ester von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzliche Öle, verzweigte primäre Alkohole, substituierte Cyclohexane, lineare und verzweigte C₆-C₂₂-Fettalkoholcarbonate, Guerbetcarbonate, Ester der Benzoesäure mit linearen und/oder verzweigten C₆-C₂₂-Alkoholen (z.B. Finsolv® TN), lineare oder verzweigte, symmetrische oder unsymmetrische Dialkylether mit 6 bis 22 Kohlenstoffatomen pro Alkylgruppe, Ringöffnungsprodukte von epoxidierten Fettsäureestem mit Polyolen, Siliconöle und/oder aliphatische bzw. naphthenische Kohlenwasserstoffe, wobei letztere vorzugsweise 8 bis 20 Kohlenstoffatome aufweisen.

Tendenziell empfiehlt es sich, die Menge an Primärlösungsmittel und Emulgator möglichst gering zu halten.

### Herstellung der Nanodispersion

Im zweiten Schritt des Verfahrens wird die zuvor hergestellte Makroemulsion bei 30 bis 120°C in ein Tertiärlösungsmittel eingebracht, bei dem es sich wieder um Wasser oder ein kosmetisches Öl handeln kann. Vorzugsweise wird man die Makroemulsion langsam in das Tertiärlösungsmittel eintropfen, so daß das Primärlösungsmittel schlagartig verdampfen kann. Weiterhin ist es bevorzugt, Sekundär- und Tertiärlösungsmittel gleich zu wählen. Falls gewünscht, kann die resultierende Nanodispersion aufkonzentriert werden, indem man das verbleibende Sekundär- bzw. Tertiärlösungsmittel beispielsweise unter vermindertem Druck abtrennt.

### Beispiele

**Beispiel 1.**0,26 g Phytosterol wurden in 10 g Diethylether unter Rühren gelöst. Anschließend wurde die Lösung in einer Mischung bestehend aus 5 g PEG-20 Sorbitanmonopalmitat und 50 g Wasser dispergiert. Die resultierende Ether/Wasser-Makroemulsion zeigte bei Lichtstreuung eine Teilchengrößenverteilung im Bereich von 50 bis 500 nm mit einem Maximum bei 90 nm. Anschließend wurden 300 ml Wasser in einem 1-I-Dreihalskolben mit Rührer, Tropftrichter und Destillationsaufsatz auf 90°C erhitzt. Die Makroemulsion wurde langsam zugetropft und der verdampfende Diethylether abdestilliert. Es wurde eine weitere Stunde nachgerührt, um den Ether quantitativ zu entfernen, danach wurde die Nanodispersion am Rotationsverdampfer eingeengt. Es wurden 25 g einer milchig weißen, homogenen Dispersion mit einem Phytosterolgehalt von ca. 1 Gew.-% erhalten. In der Lichtstreuung zeigte die Dispersion eine Teilchengrößenverteilung im Bereich von 40 bis 200 nm mit einem Maximum bei 60 nm; gemäß transmissionselektronenmikroskopischem Befund lagen sphärische Partikel mit einem Durchmesser von 70 bis 250 nm vor.

**Beispiel 2.** Beispiel 1 wurde wiederholt, jedoch nur 0,5 g Emulgator eingesetzt. Es wurde wiederum eine milchig weiße, homogene Nanodispersion erhalten, die in der Lichtstreuung eine Teilchengrößenverteilung im Bereich von 30 bis 200 nm mit einem Maximum bei 50 nm zeigte.

**Beispiel 3.** Analog Beispiel 1 wurden 5 g Phytosterol in 50 g Diethylether unter Rühren gelöst. Anschließend wurde die Lösung in einer Mischung bestehend aus 3 g PEG-20 Sorbitanmonopalmitat, 13 g Sorbitanmonolaurat und 50 g Wasser dispergiert. Die resultierende Ether/Wasser-Makroemulsion zeigte bei Lichtstreuung eine Teilchengrößenverteilung im Bereich von 30 bis 300 nm mit einem Maximum bei 60 nm. Anschließend wurden 300 ml Wasser in einem 1-l-Dreihalskolben mit Rührer, Tropftrichter und Destillationsaufsatz auf 90°C erhitzt. Die Makroemulsion wurde langsam zugetropft und der verdampfende Diethylether abdestilliert. Es wurde eine weitere Stunde nachgerührt, um den Ether quantitativ zu entfemen, danach wurde die Nanodispersion am Rotationsverdampfer eingeengt. Es wurden 84 g einer milchig weißen, homogenen Dispersion mit einem Phytosterolgehalt von ca. 6 Gew.-% erhalten. In der Lichtstreuung zeigte die Dispersion Kristalle mit einer Teilchengrößenverteilung im Bereich von 20 bis 200 nm und einem Maximum bei 50 nm.

**Beispiel 4.** Analog Beispiel 1 wurden 0,5 g Phytosterol in 20 g Diethylether unter Rühren gelöst. Anschließend wurde die Lösung in einer Mischung bestehend aus 1 g PEG-20 Sorbitanmonopalmitat und 50 g Wasser dispergiert. Die resultierende Ether/Wasser-Makroemulsion zeigte bei Lichtstreuung eine Teilchengrößenverteilung im Bereich von 150 bis 500 nm mit einem Maximum bei 250 nm. Anschließend wurden 600 ml Wasser in einem 1-I-Dreihalskolben mit Rührer, Tropftrichter und Destillationsaufsatz auf 90°C erhitzt. Die Makroemulsion wurde langsam zugetropft und der verdampfende Diethylether abdestilliert. Es wurde eine weitere Stunde nachgerührt, um den Ether quantitativ zu entfemen, danach wurde die Nanodispersion am Rotationsverdampfer eingeengt. Es wurden 5 g einer milchig weißen, homogenen Dispersion mit einem Phytosterolgehalt von ca. 10 Gew.-% erhalten. In der Lichtstreuung zeigte die Dispersion Partikel mit einer Teilchengrößenverteilung im Bereich von 20 bis 200 nm und einem Maximum bei 90 nm.

**Beispiel 5.** 0,26 g Salicylsäure-N-octylamid wurden in 25 mol Diethylether unter Rühren gelöst. Anschließend wurde die Lösung in einer Mischung aus 0,5 g PEG-20 Sorbitanmonopalmiat und 50 g Wasser unter Bildung einer Makrodispersion dispergiert. Durch Zusatz von Citronensäure wurde die Dispersion auf pH 6 eingestellt; in der Lichtstreuung wurde ein Maximum bei 200 nm gefunden. Danach wurde die homogene Dispersion langsam bei 90°C in 300 g Wasser eingetropft und der freiwerdende Diethylether über eine Destillationsbrücke entfernt. Nach weiterer Einengung der Mischung am Rotationsverdampfer wurden 25 g einer weiß opaleszierenden Dispersion mit einem Aktivsubstanzgehalt von 1 Gew.-% erhalten, die in der Lichtstreuung ein Maximum bei einer Partikelgröße von 120 nm zeigte.

**Beispiel 6.** Analog Beispiel 5 wurden 60 g Dicocoyl Hydroxyethylammonium Methosulfate, gelöst in 120 g n-Propanol, in einer Mischung 5 g Oleth-2 und 40 g Octan zu einer Mikroemulsion verarbeitet. Die homogene Emulsion wurde langsam in 40 g Dicaprylylether eingetropft und das n-Propanol entfemt. Es wurden 100 g einer braun opaken Dispersion mit einem Aktivsubstanzgehalt von 60 Gew.-% und einem Maximum in der Lichtstreuung bei 90 nm erhalten.

**Beispiel 7.** Analog Beispiel 5 wurden 5 g Phytosterol in einer Mischung aus 5 g PEG-20 Sorbitanmonopalmitat und 5 g Sorbitanmonolaurat bis auf 120°C erhitzt, wobei eine klare braune Mischung entstand. Diese wurde auf Raumtemperatur abgekühlt und portionsweise mit 120 g Diethylether versetzt. Die resultierende klare Lösung wurde in 150 g Wasser gegeben, wobei eine O/W-Makroemulsion erhalten wurde, die ein Maximum in der Lichtstreuung bei 470 nm aufwies. Die homogene Emulsion wurde unter Rühren in 600 ml kochendes Wasser gegeben und der freiwerdende Diethylether abdestilliert. Es wurden 50 g einer weißen, homogenen Dispersion mit einem Aktivsubstanzgehalt von 10 Gew.-% erhalten, die ein Maximum in der Lichtstreuung bei einer Partikelgröße von 80 nm aufwies.

## Patentansprüche

1. Verfahren zur Herstellung von Nanopartikeldispersionen mit Teilchendurchmessern im Bereich von 10 bis 300 nm, bei dem man
(a) organische Wirkstoffe zunächst in einem geeigneten Primärlösungsmittel löst,
(b) die Lösung anschließend unter Zugabe von Emulgatoren in einem Sekundärlösungsmittel einbringt, welches mit dem Primärlösungsmittel nicht mischbar ist,
(c) die resultierende Makroemulsion in eine auf 30 bis 120°C erhitztes Tertiärlösungsmittel einbringt, dabei gleichzeitig das Primärlösungsmittel verdampft und gegebenenfalls anschließend
(d) die flüssigen Bestandteile der resultierenden nanoskaligen Dispersion vollständig oder anteilig abdestilliert.

2. Verfahren nach Anspruch 1, daß man organische Wirkstoff einsetzt, die ausgewählt sind aus der Gruppe, die gebildet wird von Chitosanen, Sterolen, Antioxidantien, Flavonen, Wachsen, Fettsäuren, Fettalkoholen, Metallseifen, Farbstoffen, UV-Lichtschutzfaktoren, Riechstoffen, Enzymen und Enzyminhibitoren sowie bei Raumtemperatur festen kosmetischen Inhaltsstoffen.

3. Verfahren nach den Ansprüchen 1 und/oder 2, **dadurch gekennzeichnet, daß** man Primärlösungsmittel einsetzt, welche einen Siedepunkt unterhalb von 110°C aufweisen.

4. Verfahren nach Anspruch 3, **dadurch gekennzeichnet, daß** man Primärlösungsmittel einsetzt, die ausgewählt sind aus der Gruppe, die gebildet wird von Wasser, Ethanol, Diethylether, Hexan und Heptan.

5. Verfahren nach mindestens einem der Ansprüche 1 bis 4, **dadurch gekennzeichnet, daß** man Emulgatoren einsetzt, die ausgewählt sind aus der Gruppe, die gebildet wird von Anlagerungsprodukten von 2 bis 30 Mol Ethylenoxid und/oder 0 bis 5 Mol Propylenoxid an lineare Fettalkohole mit 8 bis 22 C-Atomen, an Fettsäuren mit 12 bis 22 C-Atomen und an Alkylphenole mit 8 bis 15 C-Atomen in der Alkylgruppe; C_{12/18}-Fettsäuremono- und -diestem von Anlagerungsprodukten von 1 bis 30 Mol Ethylenoxid an Glycerin; Glycerinmono- und -diestern und Sorbitanmono- und -diestem von gesättigten und ungesättigten Fettsäuren mit 6 bis 22 Kohlenstoffatomen und deren Ethylen-oxidanlagerungsprodukten; Alkylmono- und -oligoglycosiden mit 8 bis 22 Kohlenstoffatomen im Alkylrest und deren ethoxylierte Analoga; Anlagerungsprodukten von 15 bis 60 Mol Ethylenoxid an Ricinusöl und/oder gehärtetes Ricinusöl; Polyolestern; Anlagerungsprodukten von 2 bis 15 Mol Ethylenoxid an Ricinusöl und/oder gehärtetes Ricinusöl; Partialestern auf Basis linearer, ver-zweigter, ungesättigter bzw. gesättigter C_{6/22}-Fettsäuren, Ricinolsäure sowie 12-Hydroxystearin-säure und Glycerin, Polyglycerin, Pentaerythrit, Dipentaerythrit, Zuckeralkoholen, Alkylglucosiden sowie Polyglucosiden; Mono-, Di- und Trialkylphosphaten sowie Mono-, Di- und/oder Tri-PEG-alkylphosphaten und deren Salzen; Wollwachsalkoholen; Polysiloxan-Polyalkyl-Polyether-Copoly-meren; Mischestern aus Pentaerythrit, Fettsäuren, Citronensäure und Fettalkohol und/oder Misch-estern von Fettsäuren mit 6 bis 22 Kohlenstoffatomen, Methylglucose und Polyolen; sowie Poly-alkylenglycolen.

6. Verfahren nach mindestens einem der Ansprüche 1 bis 5, **dadurch gekennzeichnet, daß** man als Sekundärlösungsmittel Wasser oder kosmetische Öle einsetzt.

7. Verfahren nach mindestens einem der Ansprüche 1 bis 5, **dadurch gekennzeichnet, daß** man als Tertiärlösungsmittel Wasser oder kosmetische Öle einsetzt.

8. Verfahren nach den Ansprüchen 6 und/oder 7, **dadurch gekennzeichnet, daß** man kosmetische Öle einsetzt, welche ausgewählt sind aus der Gruppe, die gebildet wird von Guerbetalkoholen auf Basis von Fettalkoholen mit 6 bis 18 Kohlenstoffatomen, Estem von linearen C₆-C₂₂-Fettsäuren mit linearen C₆-C₂₂-Fettalkoholen, Estem von verzweigten C₆-C₁₃-Carbonsäuren mit linearen C₆-C₂₂-Fettalkoholen, Estem von linearen C₆-C₂₂-Fettsäuren mit verzweigten Alkoholen, Estern von Hydroxycarbonsäuren mit linearen oder verzweigten C₆-C₂₂-Fettalkoholen, Estern von linearen und/oder verzweigten Fettsäuren mit mehrwertigen Alkoholen und/oder Guerbetalkoholen, Triglyceriden auf Basis C₆-C₁₀-Fettsäuren, flüssigen Mono-/Di-/Triglyceridmischungen auf Basis von C₆-C₁₈-Fett-säuren, Estern von C₆-C₂₂-Fettalkoholen und/oder Guerbetalkoholen mit aromatischen Carbonsäuren, Estem von C₂-C₁₂-Dicarbonsäuren mit linearen oder verzweigten Alkoholen mit 1 bis 22 Kohlenstoffatomen oder Polyolen mit 2 bis 10 Kohlenstoffatomen und 2 bis 6 Hydroxylgruppen, pflanzlichen Ölen, verzweigten primären Alkoholen, substituierten Cyclohexanen, linearen und verzweigten C₆-C₂₂-Fettalkoholcarbonaten, Guerbetcarbonaten, Estem der Benzoesäure mit linearen und/oder verzweigten C₆-C₂₂-Alkoholen, linearen oder verzweigten, symmetrischen oder unsymmetrischen Dialkylethern mit 6 bis 22 Kohlenstoffatomen pro Alkylgruppe, Ringöffnungsprodukten von epoxidierten Fettsäureestern mit Polyolen, Siliconölen und/oder aliphatischen bzw. naphthenischen C₈-C₂₂-Kohlenwasserstoffen.

## Claims

1. A process for the production of nanoparticle dispersions with particle diameters of 10 to 300 nm in which
(a) organic active substances are first dissolved in a suitable primary solvent,
(b) the resulting solution is then introduced with added emulsifiers into a second solvent which is immiscible with the primary solvent.
(c) the resulting macroemulsion is introduced into a tertiary solvent heated to 30 to 120°C and, at the same time, the primary solvent is evaporated and
(d) the liquid constituents of the resulting nanoscale dispersion is completely or partly distilled off.

2. A process as claimed in claim 1, **characterized in that** the organic active substances used are selected from the group consisting of chitosans, sterols, antioxidants, flavones, waxes, fatty acids, fatty alcohols, metal soaps, dyes, UV protection factors, perfumes, enzymes and enzyme inhibitors and cosmetic ingredients solid at room temperature.

3. A process as claimed in claims 1 and/or 2, **characterized in that** primary solvents with a boiling point below 110°C are used.

4. A process as claimed in claim 3, **characterized in that** the primary solvents used are selected from the group consisting of water, ethanol, diethyl ether, hexane and heptane.

5. A process as claimed in at least one of claims 1 to 4, **characterized in that** the emulsifiers used are selected from the group consisting of products of the addition of 2 to 30 moles of ethylene oxide and/or 0 to 5 moles of propylene oxide onto linear C₈₋₂₂ fatty alcohols, onto C₁₂₋₂₂ fatty acids and onto alkyl phenols containing 8 to 15 carbon atoms in the alkyl group; C_{12/18} fatty acid mono- and diesters of addition products of 1 to 30 moles of ethylene oxide onto glycerol; glycerol mono- and diesters and sorbitan mono- and diesters of saturated and unsaturated C₆₋₂₂ fatty acids and ethylene oxide addition products thereof; alkyl mono- and oligoglycosides with 8 to 22 carbon atoms in the alkyl group and ethoxylated analogs thereof; products of the addition of 15 to 60 moles of ethylene oxide onto castor oil and/or hydrogenated castor oil; polyol esters; products of the addition of 2 to 15 moles of ethylene oxide onto castor oil and/or hydrogenated castor oil; partial esters based on linear, branched, unsaturated or saturated C_{6/22} fatty acids, ricinoleic acid and 12-hydroxystearic acid and glycerol, polyglycerol, pentaerythritol, dipentaerythritol, sugar alcohols, alkyl glucosides and polyglucosides; mono-, di- and trialkyl phosphates and mono-, di- and/or tri-PEG-alkyl phosphates and salts thereof; wool wax alcohols; polysiloxane/polyalkyl/polyether copolymers, mixed esters of pentaerythritol, fatty acids, citric acid and fatty alcohol and/or mixed esters of C₆₋₂₂ fatty acids, methyl glucose and polyols; and polyalkylene glycols.

6. A process as claimed in at least one of claims 1 to 5, **characterized in that** water or cosmetic oils are used as the secondary solvent.

7. A process as claimed in at least one of claims 1 to 5, **characterized in that** water or cosmetic oils are used as the tertiary solvent.

8. A process as claimed in claims 6 and 7, **characterized in that** the cosmetic oils used are selected from the group consisting of Guerbet alcohols based on fatty alcohols containing 6 to 18 carbon atoms, esters of linear C₆₋₂₂ fatty acids with linear C₆₋₂₂ fatty alcohols, esters of branched C₆₋₁₃ carboxylic acids with linear C₆₋₂₂ fatty alcohols, esters of linear C₆₋₂₂ fatty acids with branched alcohols, esters of hydroxycarboxylic acids with linear or branched C₆₋₂₂ fatty alcohols, esters of linear and/or branched fatty acids with polyhydric alcohols and/or Guerbet alcohols, triglycerides based on C₆₋₁₀ fatty acids, liquid mono-, di-and triglyceride mixtures based on C₆₋₁₈ fatty acids, esters of C₆₋₂₂ fatty alcohols and/or Guerbet alcohols with aromatic carboxylic acids, esters of C₂₋₁₂ dicarboxylic acids with linear or branched alcohols containing 1 to 22 carbon atoms or polyols containing 2 to 10 carbon atoms and 2 to 6 hydroxyl groups, vegetable oils, branched primary alcohols, substituted cyclohexanes, linear and branched C₆₋₂₂ fatty alcohol carbonates, Guerbet carbonates, esters of benzoic acid with linear and/or branched C₆₋₂₂ alcohols, linear or branched, symmetrical or nonsymmetrical dialkyl ethers containing 6 to 22 carbon atoms per alkyl group, ring opening products of epoxidized fatty acid esters with polyols, silicone oils and/or aliphatic or naphthenic C₈₋₂₂ hydrocarbons.

## Revendications

1. Procédé de préparation de dispersions de nanoparticules ayant des diamètres de tailles particulaires allant de 10 à 300 nm, dans lequel
(a) on dissout tout d'abord des substances actives organiques dans un solvant primaire,
(b) on introduit ensuite la solution, en ajoutant des émulsifiants, dans un solvant secondaire qui n'est pas miscible avec le solvant primaire,
(c) on introduit la macroémulsion résultante dans un solvant tertiaire chauffé entre 30 et 120°C, et simultanément on fait évaporer le solvant primaire et ensuite, le cas échéant,
(d) on distille entièrement ou partiellement les constituants volatils de la dispersion à l'échelle nanométrique résultante.

2. Procédé selon la revendication 1,
**caractérisé en ce qu'**
on utilise des substances organiques choisies dans le groupe choisi par le chitosane, les stérols, les antioxydants, les flavones, les cires, les acides gras, les alcools gras, les savons métalliques, les colorants, les facteurs de protection contre la lumière UV, les parfums, les enzymes et les inhibiteurs enzymatiques ainsi que des constituants cosmétiques solides à la température ambiante.

3. Procédé selon les revendications 1 et/ou 2,
**caractérisé en ce qu'**
on utilise un solvant primaire qui présente un point d'ébullition inférieur à 110°C.

4. Procédé selon la revendication 3,
**caractérisé en ce qu'**
on utilise des solvants primaires qui sont choisis dans le groupe formé par l'eau, l'éthanol, l'éther diéthylique, l'hexane et l'heptane.

5. Procédé selon au moins l'une des revendications 1 à 4,
**caractérisé en ce qu'**
utilise des émulsifiants qui sont choisis dans le groupe formé par les produits de fixation de 2 à 30 moles d'oxyde d'éthylène et/ou de 0 à 5 moles d'oxyde de propylène sur des alcools gras linéaires comportant de 8 à 22 atomes de carbone, sur des acides gras comportant de 12 à 22 atomes de carbone et sur des alkylphénols comportant de 8 à 15 atomes de carbone dans le groupe alkyle, des mono- et diesters d'acides gras en C₁₂ à C₁₈ de produits de fixation de 1 à 30 moles d'oxyde d'éthylène sur la glycérine ; des mono- et diesters de glycérine et des mono- et diesters de sorbitane d'acides gras saturés et insaturés comportant de 6 à 22 atomes de carbone et leurs produits de fixation sur l'oxyde d'éthylène ; des alkyl-mono- et oligoglycosides comportant de 8 à 22 atomes de carbone dans le radical alkyle et leurs analogues éthoxylés ; des produits de fixation de 15 à 60 moles d'oxyde d'éthylène sur l'huile de ricin et/ou l'huile de ricin durcie ; des esters de polyol ; des produits de fixation de 2 à 15 moles d'oxyde d'éthylène sur l'huile de ricin et/ou l'huile de ricin durcie ; des esters partiels à base d'acides gras en C₆ à C₂₂ linéaires, ramifiés, insaturés ou selon les cas saturés, d'acides ricinoléique ainsi que d'acide 12-hydroxy stéarique et de glycine, et de glycérine, de polyglycérine, de pentaérythritol, de dipentaérythritol, d'alcools sacchariques, d'alkylglucosides ainsi que de polyglucosides ; des phosphates de mono-, di- et trialkyle ainsi que des phosphates de mono-, di- et/ou tri-PEG alkyle et leurs sels ; des alcools de lanoline ; des copolymères polysiloxane-polyalkyl-polyéther ; des esters mixtes dérivés de pentaérythritol, d'acides gras, d'acide citrique et d'alcool gras et/ou des esters mixtes d'acides gras comportant de 6 à 22 atomes de carbone, de méthyl glucose et de polyol ; ainsi que des polyalkylène glycols.

6. Procédé selon au moins une des revendications 1 à 5,
**caractérisé en ce qu'**
on utilise comme solvant secondaire de l'eau ou des huiles cosmétiques.

7. Procédé selon l'une des revendications 1 à 5,
**caractérisé en ce qu'**
on utilise comme solvant tertiaire de l'eau ou des huiles cosmétiques.

8. Procédé selon les revendications 6 et/ou 7,
**caractérisé en ce qu'**
on utilise des huiles cosmétiques qui sont choisies dans le groupe formé par les alcools de Guerbet à base d'alcools de Guerbet comportant de 6 à 18 atomes de carbone, les esters d'acides gras en C₆ à C₂₂ linéaires avec des alcools gras en C₆ à C₂₂ linéaires, les esters d'acides carboxyliques en C₆ à C₁₃ ramifiés avec des alcools gras en C₆ à C₂₂ linéaires, les esters d'acides gras en C₆ à C₂₂ linéaires avec des alcools ramifiés, les esters d'acides hydroxy carboxyliques avec des alcools gras en C₆ à C₂₂ linéaires ou ramifiés, les esters d'acides gras linéaires et/ou ramifiés avec des alcools polyvalents et/ou les alcools de Guerbet, les triglycérides à base d'acides gras en C₆ à C₁₀, les mélanges mono-/di-/triglycérides liquides à base d'acides gras en C₆ à C₁₈, les esters d'alcools gras en C₆ à C₂₂ et/ou les alcools de Guerbet avec des acides carboxyliques aromatiques, les esters d'acides dicarboxyliques en C₂ à C₁₂ avec des alcools linéaires ou ramifiés comportant de 1 à 22 atomes de carbone avec des polyols comportant de 2 à 10 atomes de carbone et de 2 à 6 groupes hydroxyle, les huiles végétales, les alcools primaires ramifiés, les cyclohexanes substitués, les carbonates d'alcools gras en C₆ à C₂₂ linéaires et ramifiés, les carbonates de Guerbet, les esters de l'acide benzoïque avec des alcools en C₆ à C₂₂ linéaires et/ou ramifiés, les éthers dialkyliques linéaires ou ramifiés, symétriques ou asymétriques comportant de 6 à 22 atomes de carbone par groupe alkyle, les produits d'ouverture de cycle d'esters d'acides gras époxydés avec des polyols, les huiles de silicone et/ou les hydrocarbures aliphatiques ou naphténiques en C₈ à C₂₂.
